(19) Europäisches Patentamt
European Patent Office
Office européen des brevets

(11) EP 1 761 587 B1

(12) EUROPÄISCHE PATENTSCHRIFT

(45) Veröffentlichungstag und Bekanntmachung des Hinweises auf die Patenterteilung:
**20.01.2010 Patentblatt 2010/03**

(21) Anmeldenummer: **05762575.8**

(22) Anmeldetag: **17.06.2005**

(51) Int Cl.:
***C08J 3/18*** *(2006.01)* ***C08F 265/06*** *(2006.01)*
***C08K 5/00*** *(2006.01)* ***C09D 133/12*** *(2006.01)*
***C09D 151/00*** *(2006.01)*

(86) Internationale Anmeldenummer:
**PCT/EP2005/006538**

(87) Internationale Veröffentlichungsnummer:
**WO 2006/000342 (05.01.2006 Gazette 2006/01)**

(54) **PLASTISOLE AUF BASIS EINES METHYLMETHACRYLAT-MISCHPOLYMERISATS**

PLASTISOLS BASED ON A METHYLMETHACRYLATE COPOLYMER

PLASTISOLS A BASE D'UN COPOLYMERE METHYLMETHACRYLATE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.06.2004 DE 102004030404**

(43) Veröffentlichungstag der Anmeldung:
**14.03.2007 Patentblatt 2007/11**

(73) Patentinhaber: **Evonik Röhm GmbH**
**64293 Darmstadt (DE)**

(72) Erfinder:
- **SCHATTKA, Jan, Hendrik**
**63454 Hanau (DE)**
- **LÖHDEN, Gerd**
**63457 Hanau (DE)**
- **BELZNER, Winfried**
**63584 Gründau (DE)**

(56) Entgegenhaltungen:
**EP-A- 0 533 026** **GB-A- 1 516 510**
**US-A- 4 071 653** **US-A- 4 199 486**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 761 587 B1

## Beschreibung

Die Erfindung betrifft Plastisol-Systeme mit verbesserten mechanischen Eigenschaften und gleichzeitig verbesserter Lagerstabilität.

Über längere Zeit hin haben Beschichtungen und Beläge aus Polyvinylchlorid (PVC) auf dem Markt aufgrund ihrer vielseitigen Anwendbarkeit und ihrer guten Gebrauchseigenschaften eine überragende Rolle gespielt. Dispersionen von PVC-Pulvern in Weichmachern, sogenannte Plastisole, meist unter Zusatz von Stabilisatoren und ggfls. von Füllstoffen und Pigmenten werden in größerem Umfang zur Beschichtung insbesondere im Heißtauchverfahren angewendet beispielsweise zum Korrosionsschutz von Metallen, zur Ausrüstung von Textilien und Ledern, für Schaumstoffe, Klebstoffe u.ä. (Vgl. Sarvetnik, Plastisols and Organosols, Van Nostrand, New York 1972; W. Becker u. D. Braun Kunststoff-Handbuch (Neuausgabe) Bd. 2/2, S. 1077ff, Hanser Verlag 1986).

Aus der DE-A 26 54 871 ist ein Verfahren zur Herstellung von Überzügen und Klebeverbindungen für Werkstoffe auf Basis von PVC-Plastisolen bekannt, das dadurch gekennzeichnet ist, daß man als Haftvermittler Kondensationsprodukte, hergestellt aus:

A einem polymerisierten Fettsäuregemisch mit einem erhöhten Anteil an tri- und höherpolymerisierten Fettsäuren (X) und aus

B) einem Überschuß an Polyalkylenpolyaminen,

welche einen Imidazolingehalt (Y) aufweisen, in Anteilen von 0,5 bis 5 Gew.-%, bezogen auf Plastisolformulierung, zusetzt und bei Temperaturen ab 90 °C einbrennt, wobei, wenn einer der Werte von X oder Y die 40 %-Grenze unterschreitet, der Wert der anderen Komponente zur Erzielung eines deutlichen Effekts mindestens 40 + Z (wobei Z die Differenz des kleineren Wertes zu 40 ist), vorzugsweise jedoch 40 + 2Z betragen sollte.

Eine weitere Ausgestaltung des Verfahrens gemäß der DE-A 26 54 871 stellt die DE-A 26 42 514 dar. Danach verwendet man als Haftvermittler

A) Schiffsche Basen mit 0,1 bis 1,4 Azomethingruppen/100 g Verbindung und/oder

B) Enamine mit 0,1 bis 1,4 Enamingruppen/100 g Verbindung,
allein oder im Gemisch, in Mengen von 0,1 bis 4,0 Gewichtsprozent, bezogen auf die PVC-Formulierung, und zusätzlich

C) 20 - 80 Gew.-%, bezogen auf das Gemisch von A, B, C, an Epoxidharzen.

In jüngster Zeit zeichnet sich die Tendenz ab, PVC durch andere Werkstoffe zu substituieren. Gründe dafür sind unter anderem Umweltaspekte und die Gefahr der Dioxinbildung im Brandfall.

Bei allen derartigen Bemühungen hatte jedoch zu gelten, daß die Praxis nicht bereit war, drastische Abstriche an der Qualität hinzunehmen, die man von PVC-Produkten gewohnt war.

Auf einigen Sektoren wie z. B. der Beschichtung von Metallen konnten Plastisole auf Poly(meth)acrylatbasis erfolgreich Fuß fassen (vgl. DE-C 25 43 542, DE-C 31 39 090, bzw. US-A 4 558 084, DE-C 27 22 752, DE-C 24 54 235). In der US-A 4 558 084 wird ein Plastisol auf Basis eines Copolymerisats aus Methylmethacrylat und Itaconsäure bzw. Itaconsäureanhydrid beschrieben, dem eine ausreichende Haftung auf elektrophoretisch vorbehandelten Metalloberflächen zugeschrieben wird. Auch sind z.B. Bodenbeläge auf Basis von Poly(meth)acrylat-Plastisolen vorgeschlagen worden, bei denen ein reines Polymethylmethacrylat (PMMA) zur Verwendung kommt, das teils als Emulsions-, teils als Suspensionspolymerisat eingesetzt wird (DE-C 39 03 669).

Die Schreibweise (Meth)acrylester oder (Meth)acrylat kann im Rahmen dieser Anmeldung sowohl Methacrylester bzw. Methacrylat, wie z. B. Methylmethacrylat, Ethylmethacrylat usw., als auch Acrylester bzw. Acrylat, wie z. B. Methylacrylat, Ethylacrylat usw. oder gegebenenfalls eine Mischung aus beiden bedeuten.

Ein wichtiges Anwendungsgebiet von Plastisolen ist der Schutz von Karosserieblechen am Unterboden von Kraftfahrzeugen gegen Steinschlag. In dieser Anwendung ist naturgemäß eine hohe mechanische Widerstandskraft gegen den dadurch verursachten Abrieb essentielle Voraussetzung.

Für die Verarbeitung in der Automobilindustrie ist eine möglichst lange Verwendbarkeit der Plastisolpasten ebenso unabdingbar.

EP 0533026 beschreibt ein Plastisolsystem mit verbesserter Haftung auf Kataphoreseblech auf Basis von Polyacryl(meth)acrylaten, wobei die gelierfähige Masse aus Monomeren mit einem Alkylsubstituenten von 2-12 Kohlenstoffatomen und aus einem Säureanhydrid aufgebaut ist. Über die Abriebfestigkeit der erhaltenen Plastisolformulierungen werden keine Aussagen gemacht.

EP 1162217 beschreibt ein Poly(meth)acrylat-Plastisol, welches aus Primärpartikeln mit einem Durchmesser >250 mm aufgebaut ist, wobei die Primärpartikel aus Kern-Schale-Teilchen bestehen. Die erhaltenen Plastisole sind lagerstabil, Angaben über die Abreibfestigkeit fehlen.

In verschiedenen Patentschriften wird die Möglichkeit genannt die Haftung (die (lediglich) eine wichtige Voraussetzung für gute Abriebsbeständigkeit darstellt, aber keinesfalls mit dieser gleichgesetzt werden darf) durch den Einbau stickstoffhaltiger Monomere zu verbessern.

Auf der anderen Seite ist es gängige Praxis, die Lagerstabilität von Plastisolen durch den Einbau von Methacrylsäure in der Schale zu verbessern.

Die gleichzeitige Verwendung dieser Monomere in einem Bindemittel verbietet sich jedoch oftmals, wenn es zu einer Salzbildung zwischen dem basischen Stickstoffatom und der Säurefunktion kommt.

Es bestand die Aufgabe Poly(meth)acrylat-Plastisole mit herausragender Abriebfestigkeit und gleichzeitig verbesserter Lagerstabilität der Plastisolpasten zur Verfügung zu stellen.

Die Aufgabe wurde gelöst mit Plastisolen auf Basis eines Bindemittels, **dadurch gekennzeichnet, dass** das Bindemittel

a) 0,2-15 Gew.-% eines radikalisch polymerisierbaren Monomeren mit basischem Stickstoffatom,
b) 0,2-15 Gew.-% eines einfachen oder N-substituierten Amides der Acrylsäure und/oder der Methacrylsäure, oder eines aminsubstituierten Alkylesters der Acrylsäure und/oder der Methacrylsäure
c) 0-80 Gew.-% eines oder mehrerer Alkylester der Methacrylsäure und/oder der Acrylsäure,
d) 10-90 Gew.-% des Methylesters der Methacrylsäure und
e) 0-50 Gew.-% ein oder mehrere mit den übrigen Monomeren radikalisch copolymerisierbare Monomere enthält, wobei die Summe der Komponenten 100% ergibt, und mindestens einen Weichmacher und gegebenenfalls Haftvermittler und/oder Füllstoffe und gegebenenfalls weitere plastisolübliche Bestandteile enthalten sind. Überraschend wurde gefunden, dass die erfindungsgemäßen Plastisole auf Basis eines PMMA-Bindemittels sehr hohe Abriebfestigkeiten aufweisen. In der Praxis wird zur Bestimmung der Abriebfestigkeit zumeist der Chipping-Resistance-Test (EP 1371674) durchgeführt. Es wurde gefunden, dass bei diesem Test Abriebfestigkeiten von über 70 kg Schraubenmuttern erreicht werden.

Außerdem haben diese Poly(meth)acrylat-Plastisole eine hervorragende Haftung auf kataphoretisch vorbehandelten Metalloberflächen.

Die Bindemittel für Plastisole besitzen üblicherweise Latexteilchen mit einem Kern/Schale Aufbau.

Die Latexteilchen der vorliegenden Anmeldung bestehen aus einem Kern und mindestens einer Schale, welche üblicherweise in zwei oder mehr separaten Schritten nacheinander hergestellt werden. In der Regel besitzen der Kern und die Schale(n) jeweils eine unterschiedliche Zusammensetzung.

Eine Komponente des Kerns ist Methylmethacrylat. Diese Komponente liegt vorzugsweise zu mindestens 20 Gew.-% vor und beträgt maximal 85 Gew.-%. Der Anteil des Methylmethacrylats kann vorzugsweise auch 30 bis 70 Gew.-% oder 40 bis 60 Gew.-% betragen.

Als weitere Komponente enthält der Kern der Latexteilchen üblicherweise einen oder mehrere (Meth)acrylester, dessen Alkoholkomponente 1 - 8 Kohlenstoffatome oder einen aromatischen Rest enthält.

In einer besonderen Ausführungsform ist eine Komponente des Kerns der Latexteilchen entweder n-Butyl (meth)acrylat, i-Butyl(meth)acrylat oder tert.-Butyl(meth)acrylat oder eine Mischung hieraus.

Diese Ester können zu 15 - 80 Gew.-%, zu 30- 70 oder zu 40 - 60 Gew.-% vorliegen.

Als weiteren Bestandteil können die Kerne der Latexteilchen 0 - 50 Gew.-%, 0 - 20 Gew.-%, 0 - 10 Gew.-%, oder 0 - 5 Gew.-% von einem oder mehreren copolymerisierbaren Monomeren enthalten. Die Anwesenheit dieser Monomeren kann in besonderen Fällen günstig sein, um gegebenenfalls bestimmte Eigenschaften des Kerns der Latexteilchen gezielt einzustellen. Möglich sind alle ethylenisch ungesättigten Verbindungen, die unter den gegebenen Polymerisationsbedingungen in das Polymer eingebaut werden können, das den Kern bildet.

Die zuvor genannten ethylenisch ungesättigten Monomere können einzeln oder als Mischungen eingesetzt werden.

Die Gewichts-Anteile der vorstehend genannten Komponenten des Kerns der Latexteilchen können jeweils in den genannten Bereichen variiert werden, wobei jedoch immer zu beachten ist, dass die Summe der gewählten Anteile der Komponenten zusammen 100 Gew.-% ergeben muss.

Die Latexteilchen enthalten als weitere Komponente mindestens eine Schale, die in einer zweiten oder gegebenenfalls weiteren Reaktionsstufe auf dem Kern gebildet werden. Der Zusammenhalt von Kern und Schale bzw. zwischen den Schalen kann nur durch physikalische Kräfte oder aber durch kovalente Bindungen, die durch Pfropfung entstanden sind, erreicht werden.

Wenn hier der Begriff "Schale(n)" verwendet wird, soll dies bedeuten, dass sich die betreffende Aussage entweder auf eine Schale oder gegebenenfalls auf mehrere vorliegende Schalen beziehen kann.

Eine Komponente der Schale(n) ist Methylmethacrylat. Diese Komponente liegt vorzugsweise zu mindestens 20 Gew.-% vor und beträgt maximal 95 Gew-%. Der Anteil des Methylmethacrylats kann auch 40 bis 85 Gew.-% oder 50 bis 80 Gew.-% betragen.

Als weitere Komponente enthalten die Schale(n) der Latexteilchen einen oder mehrere (Meth)acrylester, dessen Alkoholkomponente 1 - 8 Kohlenstoffatome oder einen aromatischen Rest enthält.

Eine weitere Komponente der Schale(n) ist entweder ein Amid der Acrylsäure und/oder der Methacrylsäure, oder eines aminsubstituierten Alkylesters der Acrylsäure und/oder der Methacrylsäure oder eine Mischung aus den vorstehenden Verbindungen.

Amide können einfache Amide, also Acrylamid oder Methacrylamid oder N-substituierte Amide der Acrylsäure und/oder der Methacrylsäure sein, welche funktionelle Gruppen der folgenden Formel tragen

$$-C(O)-NR_1R_2$$

wobei $R_1$ und $R_2$ unabhängig von einander H oder einen linearen oder verzweigten Alkylrest mit 1 - 10 Kohlenstoffatomen darstellen, der gegebenenfalls auch noch zusätzlich Aminogruppen der Formel $-NR_3R_4$ enthalten kann, wobei $R_3$ und $R_4$ unabhängig voneinander H oder einen linearen oder verzweigten Alkylrest mit 1 - 10 Kohlenstoffatomen darstellen oder der Stickstoff gemeinsam mit den Substituenten $R_3$ und $R_4$ auch einen fünf- bis siebengliedrigen Ring bilden kann. Der Ring kann gegebenenfalls noch durch eine oder mehrere kurzkettige Alkylgruppen, wie beispielsweise Methyl, Ethyl oder Propyl, substituiert sein oder Heteroatome wie Stickstoff oder Sauerstoff beinhalten.

Als weiteren Bestandteil können die Schalen der Latexteilchen 0 - 50 Gew.-%, 0 - 20 Gew.-%, 0 - 10 Gew.-% oder 0 - 5 Gew.-% von einem oder mehreren copolymerisierbaren Monomeren enthalten. Die Anwesenheit dieser Monomeren kann in besonderen Fällen günstig sein, um gegebenenfalls bestimmte Eigenschaften der Schale der Latexteilchen gezielt einzustellen. Möglich sind alle vinylisch ungesättigte Verbindungen, die unter den gegebenen Polymerisationsbedingungen in das Polymer eingebaut werden können, das die jeweilige Schale bildet.

Die zuvor genannten ethylenisch ungesättigten Monomere können einzeln oder als Mischungen eingesetzt werden.

Als radikalisch polymerisierbare Monomere mit basischem Stickstoff (a) können beispielsweise N-Vinyl-methyl-2-imidazol, N-Vinyl-ethyl-2-imidazol, N-Vinyl-phenyl-2-imidazol, N-Vinyl-dimethyl-2,4-imidazol, N-Vinylbenzimidazol, N-Vinylimidazolin (auch Vinyl-1-imidazolin genannt), N-Vinylmethyl-2-imidazolin, N-Vinyl-phenyl-2-imidazolin und Vinyl-2-imidazol, besonders bevorzugt N-Vinylimidazol (auch Vinyl-1-imidazol genannt), verwendet werden.

Außerdem geeignet sind N-Vinylpyrrolidon, N-Vinylmethyl-5-pyrrolidon, N-Vinylmethyl-3-pyrrolidon, N-Vinylethyl-5-pyrrolidon, N-Vinyldimethyl-5-5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allyl-caprolactam, N-Vinylcapryllactam.

Weitere geeignete Monomere sind N-Vinylcarbazol, N-Allylcarbazol, N-Butenylcarbazol, N-Hexenylcarbazol und N-(Methyl-1-ethylen)carbazol.

Als einfach oder N-substituierte Amide der Acrylsäure und/oder der Methacrylsäure oder eines aminsubstituierten Alkylesters der Acrylsäure und/oder der Methacrylsäure (b) können beispielsweise N-Methyl(meth)acrylamid, N-Dimethylaminoethyl-(meth)acrylamid, N-Dimethylaminopropyl(meth)acrylamid, N-Isopropyl(meth)acrylamid, N-tert.Butyl(meth)acrylamid, N-Isobutyl(meth)acrylamid, N-Decyl(meth)acrylamid, N-Cyclohexyl(meth)acrylamid, N-[3-(Dimethylamino)-2,2-dimethylpropyl]-methacrylamid, N-Dodecyl(meth)acrylamid, N-[3-Dimethylaminopropy](meth)acrylamid, N-[2-Hydroxy-ethyl](meth)acrylamid, besonders bevorzugt (Meth)acrylamid, verwendet werden.

Weiterhin seien die folgenden aminsubsitutierten Alkylester der (Meth)acrylsäure genannt: 2-Dimethylaminoethyl(meth)acrylat, 2-Diethylaminoethyl(meth)acrylat, 3-Dimethylamino-2,2-dimethylpropyl-1-(meth)acrylat, 3-Diethylamino-2,2-dimethylpropyl-1-(meth)acrylat, 2-Morpholinoethyl(meth)-acrylat, 2-tert.-Butylaminoethyl(meth)acrylat, 3-(Dimethyl-amino)propyl(meth)acrylat, 2-(Dimethylaminoethoxyethyl)(meth)acrylat.

Als Alkylester der Methacrylsäure und/oder der Acrylsäure (c) können Verbindungen der allgemeinen Formel

$$\begin{array}{c} R_1 \\ | \\ CH_2 = C - COOR_2 \end{array}$$

worin $R_1$ für Wasserstoff oder Methyl

$R_2$ für einen Alkylrest oder Cycloalkylrest mit bevorzugt 1 bis 12, insbesondere 1 bis 8 Kohlenstoffatomen, die gegebenenfalls verzweigt sein können steht, mit der Maßgabe daß $R_1$ und $R_2$ nicht gleichzeitig Methyl bedeuten sollen. Genannt seien z. B. n-Butylacrylat, n-Butylmethacrylat, iso-Butylmethacrylat, tert-Butylmethacrylat, 2-Ethylhexylmethacrylat und Cyclohexylmethacrylat.

Als mit den anderen Monomeren copolymerisierbare Verbindungen (e) können unter anderem 1-Alkene, wie z.B. 1-Hexen, 1-Hepten, verzweigte alken, wie z.B. Vinylcyclohexan, 3,3-Dimethylpropen, 3-Methyl-1-diisobutylen, 4-Methyl-1-penten, Vinylester, wie z.B. Vinylacetat, Styrol und/oder Derivate des Styrols, wie z.B. α-Methylstyrol, α-Ethylstyrol, Vinyltoluol, p-Methylstyrol, eingesetzt werden.

Es wurde gefunden, dass die mit den Monomeren a) verträglichen einfachen oder N-substituierten (Meth) acrylamide und die aminsubstituierten Alkylester der (Meth)acrylsäure zur Stabilisierung der Schalen, gegen den Angriff durch Weichmacher, im gleichem Maße wie die nicht verwendbare (Meth)acrylsäure beiträgt.

Durch die Stabilisierung der Schale weisen die erfindungsgemäßen Plastisole auch eine gute Lagerstabilität auf. Der Viskositätsanstieg unter standartisierten Meßbedingungen, ein Maß für die Lagerstabilität, konnte unter 16% gesenkt werden.

In einer besonderen Ausführungsform besteht das Kern/Schale-Polymer aus einem Kern und einer Schale. Das Gewichtsverhältnis von Kern zu Schale kann in weiten Grenzen variiert werden und liegt zwischen 10 : 90 und 90 : 10. Dieses Gewichtsverhältnis ergibt sich aus der Einwaage der Monomeren.

Weitere Ausführungsformen können Kern/Schale-Polymerisate sein, die aus einem Kern und zwei oder mehr Schalen bestehen. Die Anzahl der Schalen beträgt in den meisten Fällen 2 oder 3, kann jedoch auch darüber liegen. Die chemische Zusammensetzung einzelner oder aller Schalen kann gleich sein oder aber gegebenenfalls unterschiedliche Monomerzusammensetzungen aufweisen.

Die Kern/Schale-Polymerisate der vorliegenden Anmeldung bestehen aus Latexteilchen, die eine Primärteilchengröße von mindestens 250 nm, bevorzugt von mindestens 500 nm und besonders bevorzugt von mindestens 700 nm besitzen. Unter Primärteilchengröße wird hierbei der Durchmesser eines einzelnen, in der Regel annähernd sphärischen und nicht agglomerierten Polymerteilchens verstanden, welches als Produkt bei der Emulsionspolymerisation erhalten wird. Üblicherweise wird für diese Größe ein mittlerer Teilchendurchmesser angegeben, welcher beispielsweise durch Laserbeugung bestimmt werden kann.

Die Herstellung der Bindemittel kann in an sich bekannter Weise erfolgen, bevorzugt durch Emulsionspolymerisation, die gegebenenfalls mehrstufig ausgeführt werden kann.

Bei Anwendung der Emulsionspolymerisation kann vorteilhaft nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und nichtionische Tenside verwendbar. Im allgemeinen wird die verwendete Emulgatormenge - bezogen auf das Polymerisat - 2,5 Gew.-% nicht überschreiten.

Als Initiator können neben den in der Emulsionspolymerisation üblichen Verbindungen, wie z. B. Perverbindungen wie Wasserstoffperoxid, Ammoniumperoxidisulfat (APS) auch Redoxsysteme wie Natriumdisulfit-APS-Eisen sowie wasserlösliche Azo-Starter verwendet werden. Die Initiatormenge liegt im allgemeinen bei 0,005 bis 0,5 Gew.-%, bezogen auf das Polymerisat.

Die Polymerisationstemperatur richtet sich innerhalb gewisser Grenzen nach den Initiatoren. So arbeitet man bei Anwendung von APS vorteilhaft im Bereich von 60 - 90 ˚C. Bei Einsatz von Redoxsystemen kann auch bei tieferen Temperaturen, beispielsweise bei 30 ˚C polymerisiert werden. Neben Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation gestartet. Das Monomer-Wasser-Verhältnis muß dabei der freiwerdenden Reaktionswärme angepaßt werden. In der Regel treten keine Schwierigkeiten auf, wenn man eine 50 %-ige Emulsion so erzeugt, daß man zunächst die Häfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Häfte der Monomeren zusammen mit den Hilfsstoffen zusetzt.

Die Gewinnung der Bindemittel in fester Form kann in herkömmlicher Weise durch Gefriertrocknung, Ausfällen oder vorzugsweise Sprühtrocknung vorgenommen werden.

Die Sprühtrocknung der Dispersionen kann in bekannter Weise erfolgen. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder bevorzugt mittels einer schnell rotierenden Lochscheibe zerstäubt. Die eintretende Heißluft hat eine Temperatur von 100 bis 250, vorzugsweise von 150 - 250 ˚C. Für die Eigenschaften des sprühgetrockneten Emulsionspolymerisats ist die Austrittstemperatur der Luft entscheidend, d.h. die Temperatur, bei der die getrockneten Pulverkörnchen am Fuß des Sprühturms oder in einem Zyklonabschneider von dem Luftstrom getrennt werden. Diese Temperatur soll möglichst unter der Temperatur liegen, bei der das Emulsionspolymerisat sintern oder schmelzen würde. In vielen Fällen ist eine Austrittstemperatur von 50 - 90 ˚C gut geeignet.

Die Austrittstemperatur läßt sich bei konstantem Luftstrom durch Variation der kontinuierlich je Zeiteinheit

eingesprühten Dispersionsmenge regeln.

Dabei kommt es meist zur Bildung von Sekundärteilchen, die aus agglomerierten Primärpartikel bestehen. Unter Umständen kann es vorteilhaft sein, dass die einzelnen Latexteilchen beim Trocknen miteinander zu größeren Einheiten verkleben (partielle Verglasung). Als Richtwert für die durchschnittlichen Korngrößen der agglomerierten Einheiten (gemessen beispielsweise mit der Methode der Laserbeugung) kann man 5 - 250 μm annehmen.

Die erfindungsgemäß einzusetzenden Polymerisate können auch nach dem Verfahren der Suspensionspolymerisation hergestellt werden.

Die Primärteilchengröße liegt in diesem Fall üblicherweise im Bereich von 10 bis 100 μm.

Weiter können die erfindungsgemäßen Bindemittel auch als Kern-Schale-Polymerisate in Anlehnung an die DE-C 27 22 752 bzw. die US-A 4 199 486 hergestellt werden. Kernpolymerisat und Schalenpolymerisat stehen dabei vorzugsweise im Gewichtsverhältnis 4 : 1 bis 1 : 4. Es können auch mehrere Schalen um den Kern aufgebaut werden.

Grundsätzlich eignet sich eine Vielzahl von Monomeren zur Herstellung der Kern-Schale-Polymerisate.

Der Aufbau der Copolymerisate aus einem Kernmaterial und einem Schalenmaterial wird in an sich bekannter Weise durch eine bestimmte Verfahrensweise bei der Emulsionspolymerisation erhalten. Dabei werden die das Kernmaterial bildenden Monomeren in wäßriger Emulsion in der ersten Verfahrensstufe polymerisiert. Wenn die Monomeren der ersten Stufe im wesentlichen auspolymerisiert sind, werden die Monomerbestandteile des Schalenmaterials unter solchen Bedingungen zu dem Emulisonspolymerisat zugegeben, daß die Bildung neuer Teilchen vermieden wird. Dadurch wird das in der zweiten Stufe entstehende Polymerisat schalenförmig um das Kernmaterial herum gelagert.

Aus den erfindungsgemäßen Bindemitteln können Plastisole hergestellt werden, die Kern/Schale-Polymerisate und mindestens einen Weichmacher enthalten. Weichmacher werden oft auch als Plastifizierungsmittel bezeichnet. In vielen Fällen wird die Verwendung eines einzigen Weichmachers genügen, es kann aber auch vorteilhaft sein, ein Gemisch von zwei oder mehreren verschiedenen Weichmachern zu verwenden.

Als Weichmacher besonders erwähnt seien die Phthalate, wie zum Beispiel das Diisodecylphthalat, Diethylhexylphthalat, Diisononylphtalat, Di-C7-C11-n-alkylphthalat, Dioctylphthalat, Trikresylphosphat, Dibenzyltoluol und Benzyloctylphthalat.

Darüber hinaus können auch andere Verbindungen wie Citrate, Phosphate und Benzoate verwendet werden. (Vgl. H.K. Felger, Kunststoff-Handbuch Bd. 1/1C, Hanser-Verlag 1985 sowie in H.F. Mark et al. Encyclopedia of Polymer Science and Engineering, Supplemental Volume pg. 568 - 647, J. Wiley 1989). Eine Auswahl geeigneter Weichmacher kann auch der DE-C 25 43 542 entnommen werden.

Die genannten Weichmacher können auch als Mischungen eingesetzt werden.

Die Mengenverhältnisse in Plastisolpasten können in weiten Bereichen variieren. In typischen Rezepturen sind die Weichmacher in Anteilen von 50 bis 300 Gew.-Teilen, auf 100 Gew.-Teile des Kern/Schale-Polymerisats enthalten. Zur Anpassung an die rheologischen Anforderungen - insbesondere bei der Verarbeitung der Plastisole - können zudem Lösungsmittel (wie zum Beispiel Kohlenwasserstoffe) als Verdünner eingesetzt werden.

Weiter enthalten die Plastisole gewöhnlich noch anorganische Füllstoffe in Mengen von 0-300 Gew.-Teilen. Genannt seien beispielsweise Calciumcarbonat (Kreide), Titandioxid, Calciumoxid, gefällte und gecoatete Kreiden als rheologisch wirksame Additive, ferner gegebenenfalls Thixotropierungsmittel wie z. B. pyrogene Kieselsäure.

Oftmals werden dem Plastisol außerdem Haftvermittler in Mengen von 40-120 Gew.-Teilen zugesetzt; verwendet werden beispielsweise Polyaminoamide oder blockierte Isocyanate.

Selbstvernetzende blockierte Isocyanate, als besonders effektive Haftvermittler in der Anwendung bei Bereich Poly(meth)acrylat-Plastisolen werden zum Beispiel in EP 1371674 beschrieben.

Die Plastisole können anwendungsbedingt noch weitere plastisolübliche Bestandteile (Hilfsstoffe) wie Netzmittel, Stabilisatoren, Verlaufsmittel, Pigmente, Treibmittel enthalten.

Erwähnt seien z. B. Calciumstearat als Verlaufsmittel.

Prinzipiell kann die Mischung der Komponenten für die erfindungsgemäßen Plastisole mit verschiedenartigen Mischern vorgenommen werden. Im Einklang mit den Erfahrungen bei PVC- und Poly(meth)acrylat-Plastisolen werden jedoch langsam laufende Planeten-Rührwerke, Hochgeschwindigkeits-Mischer bzw. Dissolver, Horizontal-Turbomischer und Dreiwalzenwerke bevorzugt; wobei die Wahl von der Viskosität der erzeugten Plastisole beeinflußt wird.

Die Plastisol-Masse kann typischerweise in Schichtstärken von 0,05 - 5 mm bei Temperaturen von 100 - 220 °C (vorzugsweise 120 - 160 °C) innerhalb von weniger als 30 Minuten geliert werden.

Bevorzugt werden als Auftragungsmodus für die Beschichtung von Metallteilen derzeit Spritzverfahren, z. B. Pastenspritzverfahren. Dabei wird das Plastisol gewöhnlich mit hohen Drücken (ca. 300 - 400 bar) über airless-Spritzpistolen verarbeitet.

Im besonders wichtigen Anwendungsbereich Automobilherstellung / Unterbodenschutz wird gewöhnlich so verfahren, dass das Plastisol nach der Elektrotauchlackierung der Karosserie und erfolgter Trocknung aufgetragen wird. Die thermische Härtung geschieht gewöhnlich in einem Heizofen (z.B. Umluftofen) bei üblichen Verweilzeiten - abhängig von der Temperatur- im Bereich 10 - 30 Minuten und Temperaturen zwischen 100 und 200 °C, vorzugsweise 120 - 160 °C.

Die kataphoretische Beschichtung von metallischen Substraten ist vielfach beschrieben worden (vgl. DE-A 27

51 498, DE-A 27 53 861, DE-A 27 32 736, DE-A 27 33 188, DE-A 28 33 786).

Die erfindungsgemäßen Plastisole können zur Nahtabdeckung genutzt werden. Außerdem gibt es Anwendungsfelder in der akustischen Schalldämpfung, z.B. im Automobilbau.

Die erfindungsgemäßen Plastisol-Systeme zeigen überraschenderweise eine gute bis sehr gute Haftung auf metallischen Untergründen, insbesondere auf Kataphoreseblechen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

BEISPIELE

<u>Beispiele 1</u>

In einem mittels Wasserbad temperierbaren 5-Liter-Reaktor mit Rührer, Rückflusskühler, Thermometer und Dosierpumpe werden unter Stickstoffatmosphäre 1100 g Wasser vorgelegt. Unter Rühren wird auf 74˚C-76˚C vorgeheizt.

Zur Initiierung werden 30 ml einer 5%-igen wässrigen Lösung Natriumperoxodisulfat und 30 ml einer 5%-igen wässrigen Lösung Natriumhydrogensulfit zugesetzt.

Anschließend wird im Verlauf einer Stunde eine Monomeremulsion, bestehend aus 300g Methylmethacrylat, 340 g iso-Butylmethacrylat, 340 g n-Butylmethacryfat und 20 g N-Vinylimidazol, sowie 8 g Sulfobernsteinsäure-bis-2-ethylhexylester (Natriumsalz) und 450 ml deionisiertem Wasser, zugetropft.

Nach beendeter Zudosierung wird 30 min gerührt und anschließend werden weitere 15 ml einer 5%-igen wässrigen Lösung Natriumperoxodisulfat und 15 ml einer 5%-igen wässrigen Lösung Natriumhydrogensulfit zugegeben.

Es wird eine zweite Monomeremulsion bestehend aus 880 g Methylmethacrylat, 50 g iso-Butylmethacrylat, 50 g n-Butylmethacrylat, 20 g N-Vinylimidazol und 8 g Sulfobernsteinsäure-bis-2-ethylhexylester (Natriumsalz) und 450 ml deionisiertem Wasser innerhalb einer Stunde zudosiert. Ein Anstieg der Reaktionstemperatur über 80˚C wird mittels Wasserbadkühlung vermieden.

Nach Zugabe der Emulsion wird die Temperatur während einer Nachreaktionszeit von 30 min zwischen 75˚C und 80˚C gehalten, bevor die entstandene Dispersion auf Raumtemperatur abgekühlt wird.

<u>Beispiel 2</u>

Die Synthese erfolgt analog Beispiel 1. Es werden jedoch in der zweiten Monomeremulsion 30 g Methylmethacrylat durch 30 g Methacrylamid ersetzt.

<u>Vergleichsbeispiel 1</u>

Plastisole die den Stand der Technik sehr gut repräsentieren sind in EP 1162217 beschrieben.

Ein Beispiel ist etwa das als Beispiel A1 angegebene Bindemittel, welches Kern und Schale in gleichen Gewichtsverhältnissen enthält. Das Kernpolymer besteht dabei aus 60 Gew-% Methylmethacrylat und 40 Gew-% n-Butylmethacrylat. Das Schalenpolymer enthält 76 Gew-% Methylmethacrylat, 20 Gew-% n-Butylmethacrylat und 4 Gew-% Methacrylsäure.

Die Herstellung erfolgt in einer vergleichbaren Weise zu dem in den Beispielen 1 und 2 beschriebenen Verfahren.

<u>Beispiel 3</u>

In einem Trockenturm mit Zentrifugalzerstäuber wird die Polymerdispersion in ein Pulver überführt. Die Turmaustrittstemperatur beträgt dabei 80˚C; die Umdrehungsgeschwindigkeit der Zerstäuberscheibe beträgt 20000 $min^{-1}$.

<u>Beispiel 4</u>

Die Herstellung der Plastisole erfolgt in einem Dissolver analog der in DIN 11468 für Polyvinylchlorid-Pasten festgelegten Verfahren.

Verwendet wurden folgende Komponenten :

- 100 Gewichtsteile Bindemittel
- 140 Gewichtsteile Weichmacher (Diisononylphthalat)
- 80 Gewichtsteile blockiertes Isocyanat (Gehalt an Isocyanatgruppen 3,6%, mittleres Molekulargewicht 3000 g/mol. Hergestellt durch Umsetzung von 6 Gewichtsteilen Toluoldiisocyanat mit einem Gewichtsteil Polypropylenglykol

(mittleres Molekulargewicht 3000 g $mol^{-1}$) und nachfolgender Blockierung der Isocyanatgruppen des entstandenen Urethanprepolymers mit Methylethylketoxim).

- 100 Gewichtsteile Füllstoff (Calciumcarbonat; Calcit GS0 von Kalkwerke Johann Schäfer)

Beispiel 5

Als Maß für die Lagerstabilität wird der Anstieg der Viskosität über einen definierten Zeitraum bei definierter Lagerung herangezogen.

Dazu wird die Viskosität $V_I$ des frisch hergestellten Plastisols gemessen. Anschließend wird die Paste in einem verschlossenen Behälter für 7 Tage bei 35°C gelagert. Dann wird die Viskosität $V_E$ der gelagerten Paste gemessen.

Der Anstieg der Viskosität in Prozent errechnet sich durch

$$(V_E-V_I)/(V_I)*100$$

• Viskositätsanstieg ist größer als 16 %
○ Viskositätsanstieg ist größer als 8 % und kleiner als 16 %

✶ Viskositätsanstieg ist kleiner als 8 %

Beispiel 6

Die Plastisolpaste wird mit einem Rakel in einer Dicke von 500 µm auf ein kathodisch tauchlackiertes Blech (KTL-Blech) aufgetragen. Anschließend wird der Plastisolfilm 30 Minuten in einem Elektroofen bei 140°C ausgeliert.

Beispiel 7

Die Abriebsfestigkeit ist ein herausragendes Qualitätskriterium für Plastisole. Eine häufig verwendete Meßmethode wird in EP 1371674 beschrieben. Der dort dargestellte Chipping-Resistance-Test beruht auf einer Methode, bei der die zu untersuchende Beschichtung mit einer definierten Schichtdicke auf einen Träger (zumeist ein Blech) aufgetragen wird. Unter einem definierten Winkel werden dann aus einer definierten Höhe Schraubenmuttern auf die Beschichtung fallen gelassen. Die Menge an Schraubenmuttern, die die Beschichtung aushält, bevor das darunterliegende Material zum Vorschein kommt wird als Messwert für die Abriebsfestigkeit herangezogen.

Hohe Werte entsprechen guten Abriebsfestigkeiten.
• weniger als 40 kg
○ mehr als 40 kg und weniger als 70 kg

✶ mehr als 70 kg

| | Bindemittel aus VERGLEICHS-BEISPIEL 1 | Bindemittel aus BEISPIEL 1 | Bindemittel aus BEISPIEL 2 |
|---|---|---|---|
| Viskositätsanstieg der Plastisolpaste nach 7 Tagen (Lagerung bei 35°C) | ✶ | ○ | ✶ |
| Abriebsfestigkeit (eines nach Beispiel 6 hergestellten Filmes) | ○ | ✶ | ✶ |

Die Beispiele zeigen, daß die Verwendung des stickstoffhaltigen Monomers (Vinylimidazol) die Abriebsfestigkeit signifikant erhöht.

Eine ausreichende Lagerstabilität ist jedoch nur in der Kombination mit Methacrylamid zu erreichen.

**Patentansprüche**

1. Plastisol auf Basis eines Bindemittels, **dadurch gekennzeichnet, dass** das Bindemittel

   a) 0,2-15 Gew.-% eines radikalisch polymerisierbaren Monomeren mit basischem Stickstoffatom ausgewählt aus der Gruppe N-Vinyl-methyl-2-imidazol, N-Vinyl-ethyl-2-imidazol, N-Vinyl-phenyl-2-imidazol, N-Vinyldimethyl-2,4-imidazol, N-Vinyl-benzimidazol, N-Vinylimidazolin, N-Vinylmethyl-2-imidazolin, N-Vinyl-phenyl-2-imidazolin und Vinyl-2-imidazol, N-Vinylpyrrolidon, N-Vinylmethyl-5-pyrrolidon, N-Vinylmethyl-3-pyrrolidon, N-Vinylethyl-5-pyrrolidon, N-Vinyldimethyl-5-5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allyl-caprolactam, N-Vinylcapryllactam N-Vinylcarbazol, N-Allylcarbazol, N-Butenylcarbazol, N-Hexenylcarbazol und N-(Methyl-1-ethylen)carbazol enthält,
   b) 0,2-15 Gew.-% eines einfachen oder N-substituierten Amides der Acrylsäure und/oder der Methacrylsäure, oder eines aminsubstituierten Alkylesters der Acrylsäure und/oder der Methacrylsäure
   c) 0-80 Gew.-% eines oder mehrerer Alkylester der Methacrylsäure und/oder der Acrylsäure,
   d) 10-90 Gew.-% des Methylesters der Methacrylsäure und
   e) 0-50 Gew.-% ein oder mehrere mit den übrigen Monomeren radikalisch copolymerisierbare Monomere enthält, wobei die Summe der Komponenten 100% ergibt, und mindestens einen Weichmacher und gegebenenfalls Haftvermittler und/oder Füllstoffe und gegebenenfalls weitere plastisolübliche Bestandteile enthalten sind.

2. Plastisol auf Basis eines Bindemittels gemäß Anspruch 1, **dadurch gekennzeichnet, dass** das radikalisch polymerisierbare Monomer mit basischem Stickstoffatom (a) N-Vinylimidazol ist.

3. Plastisol auf Basis eines Bindemittels gemäß Anspruch 1, **dadurch gekennzeichnet, dass** das Amid (b) Methacrylamid ist.

4. Plastisol auf Basis eines Bindemittels gemäß Anspruch 1, **dadurch gekennzeichnet, dass** das Bindemittel einen Kern-Schale-Aufbau besitzt, wobei die Monomerzusammensetzung von Kern und Schale verschieden sein können.

5. Plastisol auf Basis eines Bindemittels gemäß Anspruch 4, **dadurch gekennzeichnet, dass** mehrere Schalen, gegebenenfalls mit verschiedenen Monomerzusammensetzungen, um den Kern aufgebaut sind.

6. Plastisol auf Basis eines Bindemittels gemäß Anspruch 1, **dadurch gekennzeichnet, dass** die Abriebfestigkeit über 50 kg Schraubenmuttern (Chipping-Resistance-Test) beträgt.

7. Plastisol auf Basis eines Bindemittels gemäß Anspruch 1, **dadurch gekennzeichnet, dass** die Abriebfestigkeit über 70 kg Schraubenmuttern beträgt.

8. Verfahren zur Herstellung von Plastisolen auf Basis eines Bindemittels gemäß Anspruch 1, **dadurch gekennzeichnet, dass**

   a. das Bindemittel durch Emulsionspolymerisation, die gegebenenfalls mehrstufig ist, hergestellt wird,
   b. die entstandene Dispersion getrocknet und
   c. anschließend mit mindestens einem Weichmacher und
   gegebenenfalls mit Haftvermittlern und/oder Füllstoffen und gegebenenfalls weiteren plastisolüblichen Bestandteilen versetzt wird.

9. Verfahren zur Herstellung von Plastisolen auf Basis eines Bindemittels gemäß Anspruch 8, **dadurch gekennzeichnet, dass** zur Herstellung des Bindemittels eine Initiatorlösung vorgelegt und eine Monomeremulsion zudosiert wird, zu der bei Temperaturen zwischen 50˚C und 100˚C gegebenenfalls weitere Monomeremulsionen zudosiert werden.

10. Verfahren zur Herstellung von Plastisolen gemäß Anspruch 8, **dadurch gekennzeichnet, dass** verschiedene Monomeremulsionen zudosiert werden.

11. Verfahren zur Herstellung von Plastisolen gemäß Anspruch 8, **dadurch gekennzeichnet, dass** die Zudosierung

der zweiten und jeder weiteren Monomeremulsion bei 80-95˚C erfolgt.

**12.** Verfahren zur Herstellung von Plastisolen gemäß Anspruch 8, **dadurch gekennzeichnet, dass** 100 Gewichtsteile Bindemittel mit 50-300 Gewichtsteilen Weichmacher, 40-120 Gewichtsteilen Haftvermittler und/oder 0-300 Gewichtsteilen Füllstoffen versetzt werden.

**13.** Verfahren zur Herstellung von Plastisolen gemäß Anspruch 8, **dadurch gekennzeichnet, dass** die Dispersionen mittels Sprühtrocknung getrocknet werden.

**14.** Verwendung von Plastisolen gemäß Anspruch 1 bis 7 als Unterbodenschutz.

**15.** Verwendung von Plastisolen gemäß Anspruch 1 bis 7 als Nahtabdeckung.

**16.** Verwendung von Plastisolen gemäß Anspruch 1 bis 7 zur akustischen Schalldämpfung.

## Claims

**1.** Plastisol based on a binder, **characterized in that** the binder comprises

a) from 0.2 to 15% by weight of a monomer which has a basic nitrogen atom and which is capable of free-radical polymerization, selected from the group consisting of N-vinyl-2-methylimidazole, N-vinyl-2-ethylimidazole, N-vinyl-2-phenylimidazole, N-vinyl-2,4-dimethylimidazole, N-vinylbenzimidazole, N-vinylimidazoline, N-vinyl-2-methylimidazoline, N-vinyl-2-phenylimidazoline and 2-vinylimidazole, N-vinylpyrrolidone, N-vinyl-5-methylpyrrolidone, N-vinyl-3-methylpyrrolidone, N-vinyl-5-ethylpyrrolidone, N-vinyl-5,5-dimethylpyrrolidone, N-vinyl-5-phenylpyrrolidone, N-allylpyrrolidone, N-vinylthiopyrrolidone, N-vinylpiperidone, N-vinyl-6,6-diethylpiperidone, N-vinylcaprolactam, N-vinyl-7-methylcaprolactam, N-vinyl-7-ethylcaprolactam, N-vinyl-7,7-dimethylcaprolactam, N-allylcaprolactam, N-vinylcaprylolactam, N-vinylcarbazole, N-allylcarbazole, N-butenylcarbazole, N-hexenylcarbazole and N-(1-methylethylene)-carbazole,
b) from 0.2 to 15% by weight of a simple or N-substituted amide of acrylic acid and/or of methacrylic acid, or of an amine-substituted alkyl ester of acrylic acid and/or of methacrylic acid,
c) from 0 to 80% by weight of one or more alkyl esters of methacrylic acid and/or of acrylic acid,
d) from 10 to 90% by weight of the methyl ester of methacrylic acid and
e) from 0 to 50% by weight of one or more monomers capable of copolymerization with the other monomers by a free-radical route,

where the entirety of the components is 100%, and at least one plasticizer and, if appropriate, adhesion promoters and/or fillers and, if appropriate, other constituents conventional in plastisols are present.

**2.** Plastisol based on a binder according to Claim 1, **characterized in that** the monomer (a) having a basic nitrogen atom and capable of free-radical polymerization is N-vinylimidazole.

**3.** Plastisol based on a binder according to Claim 1, **characterized in that** the amide (b) is methacrylamide.

**4.** Plastisol based on a binder according to Claim 1, **characterized in that** the binder has a core-shell structure, where the monomer constitution of core and shell may be different.

**5.** Plastisol based on a binder according to Claim 4, **characterized in that** two or more shells, if appropriate with different monomer constitutions, have been constructed around the core.

**6.** Plastisol based on a binder according to Claim 1, **characterized in that** the abrasion resistance is above 50 kg of threaded nuts (chipping resistance test).

**7.** Plastisol based on a binder according to Claim 1, **characterized in that** the abrasion resistance is above 70 kg of threaded nuts.

**8.** Process for preparation of plastisols based on a binder according to Claim 1, **characterized in that**

a. the binder is prepared via emulsion polymerization, if appropriate in two or more stages,
b. the resultant dispersion is dried and
c. is then treated with at least one plasticizer and, if appropriate, with adhesion promoters and/or fillers and, if appropriate, other constituents conventional in plastisols.

**9.** Process for preparation of plastisols based on a binder according to Claim 8, **characterized in that**, for preparation of the binder, an initiator solution forms an initial charge and a monomer emulsion is metered in, and, if appropriate, other monomer emulsions are metered into this monomer emulsion at temperatures of from 50 to 100˚C.

**10.** Process for preparation of plastisols according to Claim 8, **characterized in that** various monomer emulsions are metered in.

**11.** Process for preparation of plastisols according to Claim 8, **characterized in that** the metering-in of the second and of each further monomer emulsion takes place at from 80 to 95˚C.

**12.** Process for preparation of plastisols according to Claim 8, **characterized in that** 100 parts by weight of binder are treated with from 50 to 300 parts by weight of plasticizer, from 40 to 120 parts by weight of adhesion promoter and/or from 0 to 300 parts by weight of fillers.

**13.** Process for preparation of plastisols according to Claim 8, **characterized in that** the dispersions are dried by means of spray drying.

**14.** Use of plastisols according to any of Claims 1 to 7 as underbody protection.

**15.** Use of plastisols according to any of Claims 1 to 7 as seam-covering.

**16.** Use of plastisols according to any of Claims 1 to 7 for acoustic sound-deadening.

## Revendications

**1.** Plastisol à base d'un liant, **caractérisé en ce que** le liant contient

a) 0,2 à 15 % en poids d'un monomère polymérisable par voie radicalaire contenant un atome d'azote basique, choisi dans le groupe constitué du N-vinyl-méthyl-2-imidazol, N-vinyl-éthyl-2-imidazol, N-vinyl-phényl-2-imidazol, N-vinyl-diméthyl-2,4-imidazol, N-vinyl-benzimidazol, N-vinylimidazoline, N-vinyl-méthyl-2-imidazoline, N-vinyl-phényl-2-imidazoline et vinyl-2-imidazol, N-vinylpyrrolidone, N-vinylméthyl-5-pyrrolidone, N-vinylméthyl-3-pyrrolidone, N-vinyléthyl-5-pyrrolidone , N-vinyldiméthyl-5-5-pyrrolidone, N-vinylphényl-5-pyrrolidone, N-allylpyrrolidone, N-vinylthiopyrrolidone , N-vinylpipéridone, N-vinyldiéthyl-6,6-pipéridone, N-vinylcaprolactame, N-vinylméthyl-7-caprolactame , N-vinyléthyl-7-caprolactame , N-vinyldiméthyl-7,7-caprolactame, N-allyl-caprolactame, N-vinylcapryllactame, N-vinylcarbazol, N-allylcarbazol, N-buténylcarbazol, N-hexénylcarbazol et N-(méthyl-1-éthylène)carbazol,
b) 0,2 à 15 % en poids d'un amide simple ou N-substitué de l'acide acrylique et/ou de l'acide méthacrylique, ou un ester alkylique à substitution amine de l'acide acrylique et/ou de l'acide méthacrylique,
c) 0 à 80 % en poids d'un ou de plusieurs esters alkyliques de l'acide méthacrylique et/ou de l'acide acrylique,
d) 10 à 90 % en poids de l'ester méthylique de l'acide méthacrylique et
e) 0 à 50 % en poids d'un ou de plusieurs monomères copolymérisables par voie radicalaire avec les autres monomères,
la somme des composants étant de 100 %, et au moins un plastifiant et éventuellement des promoteurs d'adhésion et/ou des charges et éventuellement d'autres constituants types des plastisols étant contenus.

**2.** Plastisol à base d'un liant selon la revendication 1, **caractérisé en ce que** le monomère polymérisable par voie radicalaire contenant un atome d'azote basique (a) est le N-vinylimidazol.

**3.** Plastisol à base d'un liant selon la revendication 1, **caractérisé en ce que** l'amide (b) est le méthacrylamide.

**4.** Plastisol à base d'un liant selon la revendication 1, **caractérisé en ce que** le liant présente une structure noyau-enveloppe, la composition monomère du noyau et de l'enveloppe pouvant être différentes.

**5.** Plastisol à base d'un liant selon la revendication 4, **caractérisé en ce que** plusieurs enveloppes, ayant éventuellement des compositions monomères différentes, sont placées sur le noyau.

**6.** Plastisol à base d'un liant selon la revendication 1, **caractérisé en ce que** la résistance à l'abrasion est supérieure à 50 kg d'écrous (Chipping Resistance Test).

**7.** Plastisol à base d'un liant selon la revendication 1, **caractérisé en ce que** la résistance à l'abrasion est supérieure à 70 kg d'écrous.

**8.** Procédé de fabrication de plastisols à base d'un liant selon la revendication 1, **caractérisé en ce que**

a. le liant est fabriqué par polymérisation en émulsion, qui comprend éventuellement plusieurs étapes,
b. la dispersion obtenue est séchée, puis
c. mélangée avec au moins un plastifiant et éventuellement avec des promoteurs d'adhésion et/ou des charges et éventuellement d'autres constituants types des plastisols.

**9.** Procédé de fabrication de plastisols à base d'un liant selon la revendication 8, **caractérisé en ce que** pour la fabrication du liant, une solution d'initiateur est chargée initialement et une émulsion de monomère est ajoutée, à laquelle des émulsions de monomères supplémentaires sont éventuellement ajoutées à des températures comprises entre 50 ˚C et 100 ˚C.

**10.** Procédé de fabrication de plastisols selon la revendication 8, **caractérisé en ce que** différentes émulsions de monomères sont ajoutées.

**11.** Procédé de fabrication de plastisols selon la revendication 8, **caractérisé en ce que** l'ajout de la deuxième émulsion de monomère et de chaque émulsion de monomère suivante a lieu à 80-95 ˚C.

**12.** Procédé de fabrication de plastisols selon la revendication 8, **caractérisé en ce que** 100 parties en poids de liant sont mélangées avec 50 à 300 parties en poids de plastifiant, 40 à 120 parties en poids de promoteurs d'adhésion et/ou 0 à 300 parties en poids de charges.

**13.** Procédé de fabrication de plastisols selon la revendication 8, **caractérisé en ce que** les dispersions sont séchées par séchage par pulvérisation.

**14.** Utilisation de plastisols selon la revendication 1 à 7 en tant que protection de dessous de carrosserie.

**15.** Utilisation de plastisols selon la revendication 1 à 7 en tant que revêtement de soudure.

**16.** Utilisation de plastisols selon la revendication 1 à 7 pour l'insonorisation acoustique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2654871 A
- DE 2642514 A
- DE 2543542 C
- DE 3139090 C
- US 4558084 A
- DE 2722752 C
- DE 2454235 C
- DE 3903669 C
- EP 0533026 A
- EP 1162217 A
- EP 1371674 A
- US 4199486 A
- DE 2751498 A
- DE 2753861 A
- DE 2732736 A
- DE 2733188 A
- DE 2833786 A


### In der Beschreibung aufgeführte Nicht-Patentliteratur


- **Sarvetnik.** *Plastisols and Organosols,* 1972
- **W. Becker ; D. Braun.** Kunststoff-Handbuch. Hanser Verlag, 1986, vol. 2/2, 1077ff
- **H.K. Felger.** Kunststoff-Handbuch. Hanser-Verlag, 1985, vol. 1/1C
- **H.F. Mark et al.** Encyclopedia of Polymer Science and Engineering. J. Wiley, 1989, 568-647